# EUROPÄISCHE PATENTSCHRIFT

(11) **EP 1 752 693 B1**
(45) Veröffentlichungstag und Bekanntmachung des Hinweises auf die Patenterteilung: **09.01.2008**
(21) Anmeldenummer: 06013425.1
(22) Anmeldetag: 29.06.2006
(51) Int. Cl.: F16K 31/10

(54) **Magnetventileinrichtung**
Solenoid actuated valve
Soupape électromagnétique

(30) Priorität: 12.08.2005 DE 20512739 U
(43) Veröffentlichungstag der Anmeldung: 14.02.2007
(73) Patentinhaber: Festo AG & Co., 73734 Esslingen (DE)
(72) Erfinder: Sailer, Steffen, 72555 Metzingen (DE); Schill, Sebastian, 71384 Weinstadt (DE); Ott, Helmut, 73770 Denkendorf (DE)
(74) Vertreter: Abel, Martin

(56) Entgegenhaltungen:
- EP-A1- 1 508 732
- WO-A-98/51946
- JP-A- 2000 104 838
- US-A- 3 972 505

## Beschreibung

Die Erfindung betrifft eine Magnetventileinrichtung, mit einem von Ventilkanälen durchsetzten Grundkörper, der mindestens einen Ventilsitzabschnitt aufweist, an dem zwei unter koaxialer Anordnung auf einer gemeinsamen Hauptachse liegende, in einander entgegengesetzte Richtungen weisende Ventilsitze angeordnet sind, denen jeweils ein Verschlusskörper gegenüberliegt, wobei die beiden Verschlusskörper durch zwei auf entgegengesetzten Seiten seitlich an dem Ventilsitzabschnitt vorbeigreifende Kopplungsstäbe derart miteinander bewegungsgekoppelt sind, dass bei Anliegen des jeweils einen Verschlusskörpers am zugeordneten Ventilsitz der jeweils andere Verschlusskörper vom zugeordneten Ventilsitz abgehoben ist, und mit einem an dem Grundkörper angeordneten Antriebskopf, der mindestens eine dem Ventilsitzabschnitt zugeordnete elektromagnetische Antriebseinheit mit einer Magnetspule und einem in Verlängerung des Ventilsitzabschnittes angeordneten, zur Vorgabe der Stellungen der Verschlusskörper in Richtung der Hauptachse bewegbaren Magnetanker aufweist.

Aus der EP 1 508 732 A1 geht eine Magnetventileinrichtung der vorgenannten Art hervor, die als Vorsteuerstufe eines Mehrwegeventils eingesetzt wird. Der den Ventilsitzabschnitt aufweisende Grundkörper ist dort mit dem jeweils zugeordneten Antriebskopf zu einer patronenartigen Baueinheit zusammengefasst. Einer der beiden Verschlusskörper befindet sich im Grundkörper und sitzt an einem U-förmigen Teil, dessen Schenkel als Kopplungsstäbe fungieren, die am Ventilsitzabschnitt vorbeigreifen und von der Stirnseite eines sich in Verlängerung des Ventilsitzabschnittes anschließenden Magnetankers beaufschlagt werden. Der zweite Verschlusskörper sitzt unmittelbar im Magnetanker selbst.

Wird die elektromagnetische Antriebseinheit der bekannten Magnetventileinrichtung längere Zeit im betätigten Zustand gehalten, überträgt sich die von der Magnetspule entwickelte Wärme auch auf den Magnetanker und beeinflusst somit den von diesem getragenen, in der Regel aus einem Elastomermaterial bestehenden Verschlusskörper. Damit dieser keinen Schaden nimmt und seine Abdichtfunktion uneingeschränkt erfüllen kann, beschränkt man entweder die maximale Betätigungsdauer der Antriebseinheit oder setzt einen aus besonderes temperaturfestem Material bestehenden Verschlusskörper ein. Beides ist nachteilig, weil entweder die Einsatzmöglichkeiten der Magnetventileinrichtung unerwünschten Beschränkungen unterliegen oder die Herstellungskosten steigen.

Es ist die Aufgabe der vorliegenden Erfindung, eine Magnetventileinrichtung der eingangs genannten Art zu schaffen, die weniger temperaturempfindlich ist.

Zur Lösung dieser Aufgabe ist vorgesehen, dass die Verschlusskörper und die Kopplungsstäbe Bestandteile eines den Ventilsitzabschnitt umschließenden, in Richtung der Hauptachse bewegbaren rahmenförmigen Steuergliedes sind, auf das der Magnetanker ohne direkten Kontakt zum benachbarten Verschlusskörper antriebsmäßig einwirken kann und bezüglich dem der Magnetanker ein gesondertes Bauteil ist.

Auf diese Weise ergibt sich hinsichtlich der Wärmeübertragung eine gewisse Entkopplung zwischen dem Magnetanker und dem diesem zugeordneten Verschlusskörper. Der Verschlusskörper ist nicht mehr Bestandteil des Magnetankers, sondern gehört zu einem bezüglich dem Magnetanker gesonderten Steuerglied, das rahmenförmig ausgebildet ist und den Ventilsitzabschnitt mit seinen beiden Ventilsitzen umschließt. Die Funktionen des Antreibens und des Steuerns sind folglich voneinander getrennt, indem die Antriebsfunktion beim Magnetanker verbleibt und die gesamte Steuerfunktion in das rahmenförmige Steuerglied verlagert wurde. Mangels direktem Kontakt zwischen Magnetanker und benachbartem Verschlusskörper ist der Wärmeübergang auf den Verschlusskörper stark reduziert, so dass auch eine längere Betätigungsdauer möglich ist, ohne dass an das Material des Verschlusskörpers besondere Anforderungen hinsichtlich der Temperaturfestigkeit gestellt werden müssten.

Vorteilhafte Weiterbildungen der Erfindung gehen aus den Unteransprüchen hervor.

Bei einer bevorzugten Ausgestaltung steht das rahmenförmige Steuerglied in Richtung des Magnetankers unter ständiger Vorspannung durch geeignete Federmittel. Zwischen dem Magnetanker und dem Steuerglied liegt lediglich ein loser Berührkontakt vor, so dass in Richtung der Hauptachse ausschließlich Schubkräfte zwischen dem Magnetanker und dem Steuerglied übertragbar sind. Wird der Magnetanker durch Aktivierung oder Deaktivierung der Magnetspule in Richtung zum Ventilsitzabschnitt verlagert, schiebt er das Steuerglied vor sich her, bis der benachbarte Verschlusskörper am zugeordneten Ventilsitz anliegt. Bei entgegengesetzter Bewegungsrichtung des Magnetankers folgt das Steuerglied aufgrund der Federbeaufschlagung nach, bis der andere Verschlusskörper an dem ihm zugeordneten Ventilsitz zur Anlage gelangt.

Der lose Berührkontakt zwischen Magnetanker und Steuerglied ist insbesondere so ausgeführt, dass zwischen diesen Komponenten quer zur Richtung der Hauptachse eine freie relative Beweglichkeit gegeben ist. Dies vereinfacht die Herstellung und Montage, weil die Anordnung auch mit nicht exakt fluchtender Ausrichtung von Steuerglied und Magnetanker uneingeschränkt funktionsfähig ist und folglich größere Toleranzen zugestanden werden können. Die Magnetspule und vorzugsweise die gesamte Antriebseinheit ist vom Steuerglied geometrisch getrennt, so dass auch bei Auftreten eines Querversatzes keine Beeinträchtigungen des Betriebes auftreten.

Das rahmenförmige Steuerelement verfügt zweckmäßigerweise über zwei die Kopplungsstäbe bildende Rahmen-Längselemente, die durch zwei zueinander beabstandete Rahmen-Querstege miteinander verbunden sind, die jeweils einen der Verschlusskörper tragen. Der Magnetanker greift hierbei zweckmäßigerweise an einem der Rahmen-Querstege an, unter Einhaltung eines gewissen Abstandes zum zugeordneten Verschlusskörper in der Richtung der Hauptachse, um den Wärmeübergang zu behindern.

Die beiden Rahmen-Längsteile und der erste der Rahmen-Querstege sind zweckmäßigerweise zu einem einstückigen U-förmigen Rahmenelement zusammengefasst, wobei der zweite Rahmen-Quersteg als gesondertes Bauteil an den dem ersten Rahmen-Quersteg entgegengesetzten freien Endabschnitten der Rahmen-Längsteile befestigt ist, um die gewünschte Rahmenstruktur zu erhalten.

Bevorzugt ist der zweite Rahmen-Quersteg mit an ihm ausgebildeten Durchbrechungen auf die freien Endabschnitte der Rahmen-Längsteile aufgesteckt. Zur Befestigung aneinander können die durch den zweiten Rahmen-Quersteg hindurchgreifenden Endabschnitte der Rahmen-Längsteile vernietet sein. Bestehen die Komponenten aus Kunststoffmaterial geschieht das Vernieten zweckmäßigerweise unter Wärmezufuhr, um die gewünschte plastische Verformung zu gewährleisten.

Bei der Materialwahl für das rahmenförmige Steuerglied wird zweckmäßigerweise darauf geachtet, zumindest für den unmittelbar vom Magnetanker beaufschlagbaren Rahmen-Quersteg ein Material zu wählen, dessen Wärmeleitfähigkeit geringer ist als diejenige des Magnetankers. Auf diese Weise wird der Wärmeübergang auf den vom betreffenden Rahmen-Quersteg getragenen Verschlusskörper wirksam eingedämmt. Als Material empfiehlt sich insbesondere ein Kunststoffmaterial. Zweckmäßigerweise bestehen auch der andere Rahmen-Quersteg sowie die beiden Rahmen-Längsteile aus einem entsprechenden Material.

Die Verschlusskörper bestehen insbesondere aus einem Material mit gummielastischen Eigenschaften, vorzugsweise einem Elastomermaterial.

Besonders einfach lässt sich die Magnetventileinrichtung zusammenbauen, wenn der Antriebskopf eine bezüglich dem Grundkörper gesonderte Komponente ist, die lösbar oder unlösbar an den Grundkörper angebaut ist. Dies gilt sowohl für eine Magnetventileinrichtung mit nur einer Magnetventileinheit als auch einer Ausführungsform, die über mehrere, insbesondere in einer Reihe nebeneinander angeordnete Magnetventileinheiten verfügt. Im letzteren Fall besteht die Möglichkeit, einen block- oder plattenartigen Grundkörper mit mehreren darin vorhandenen Ventilsitzabschnitten vorzusehen und an diesem Grundkörper einen ebenfalls block- oder plattenförmigen Antriebskopf zu installieren, der eine der Anzahl der Ventilsitzabschnitte entsprechende Anzahl von Antriebseinheiten aufweist, die bei der Montage so platziert werden, dass ihre Magnetspulen in Verlängerung jeweils eines Steuergliedes zu liegen kommen. Bei einer solchen batterieartigen Anordnung erweist sich die geometrische Trennung zwischen Magnetspule und Verschlusskörpern besonders vorteilhaft, weil die Einhaltung von Toleranzen hier regelmäßig größere Probleme bereitet als bei Bauformen mit nur einer Magnetventileinheit. Selbst bei einem deutlichen Versatz arbeiten die in der Magnetventileinrichtung integrierten mehreren Magnetventileinheiten ohne Einschränkung.

Der Grundkörper setzt sich zweckmäßigerweise aus mehreren Teilen zusammen. Der Ventilsitzabschnitt kann hierbei Bestandteil eines Einsatzes sein, der in eine zum Antriebskopf hin offene Ausnehmung eines Gehäuses des Grundkörpers eingesetzt ist. Bei der Fertigung kann das rahmenartige Steuerglied an dem noch außerhalb des Gehäuses befindlichen Einsatz montiert werden, woraufhin der komplett bestückte Einsatz in die Ausnehmung des Gehäuses einsetzbar ist.

Nachfolgend wird die Erfindung anhand der beiliegenden Zeichnung näher erläutert. In dieser zeigen:
- Figur 1: eine bevorzugte erste Bauform der erfindungsgemäßen Magnetventileinrichtung, die mit einer einzigen Magnetventileinheit ausgestattet ist, in einer Seitenansicht,
- Figur 2: die Magnetventileinrichtung aus Figur 1 in teilweise aufgeschnittenem Zustand,
- Figur 3: eine Draufsicht auf den Grundkörper der in Figuren 1 und 2 gezeigten Magnetventileinrichtung bei abgenommenem Antriebskopf mit Blickrichtung gemäß Pfeil III aus Figur 1,
- Figur 4: einen Querschnitt durch die Magnetventileinrichtung gemäß Schnittlinie IV-IV aus Figur 2,
- Figur 5: einen vergrößerten Ausschnitt der Magnetventileinrichtung im Längsschnitt gemäß Schnittlinie V-V in Figur 2, wobei der Übergangsbereich zwischen dem Antriebskopf und dem Grundkörper gezeigt ist, und
- Figur 6: in schematischer Darstellung eine weitere Ausführungsform der Magnetventileinrichtung, die mit einer Mehrzahl von Magnetventileinheiten ausgestattet ist.

Die beispielhaft gezeigten Magnetventileinrichtungen können unmittelbar selbst als direkt gesteuerte Magnetventile eingesetzt werden, aber auch als Vorsteuerventile im Rahmen fluidisch betätigbarer Wegeventile. Die Magnetventileinrichtungen eignen sich nicht ausschließlich, jedoch besonders vorteilhaft für den Einsatz in Fahrzeugen oder anderen mobilen Gerätschaften oder Maschinen. Als beispielhaft kann die Einsatzmöglichkeit als Speicherladeventil zur Steuerung der Aufladung von Druckluftspeichern in Kraftfahrzeugen erwähnt werden.

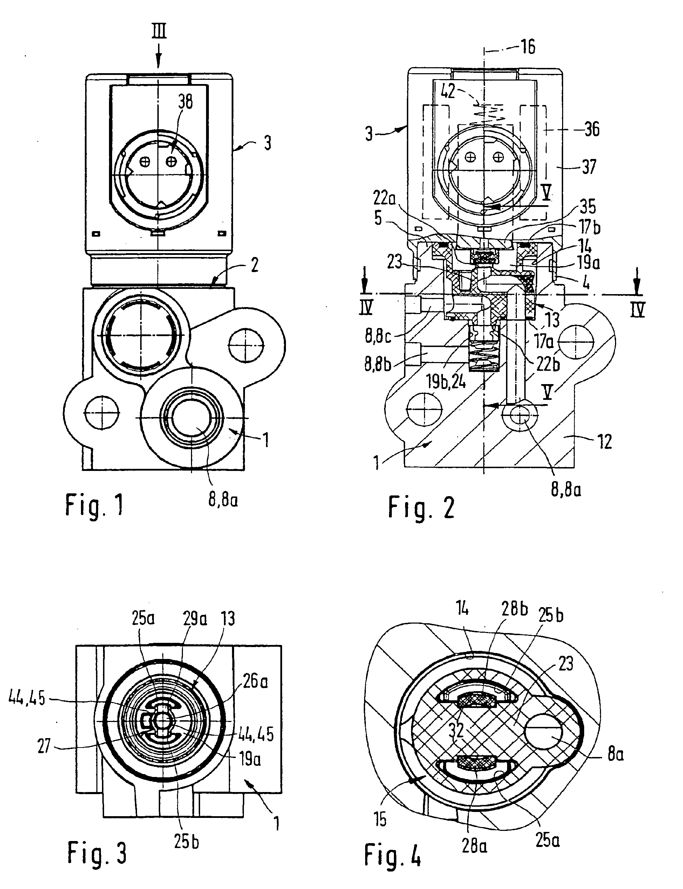

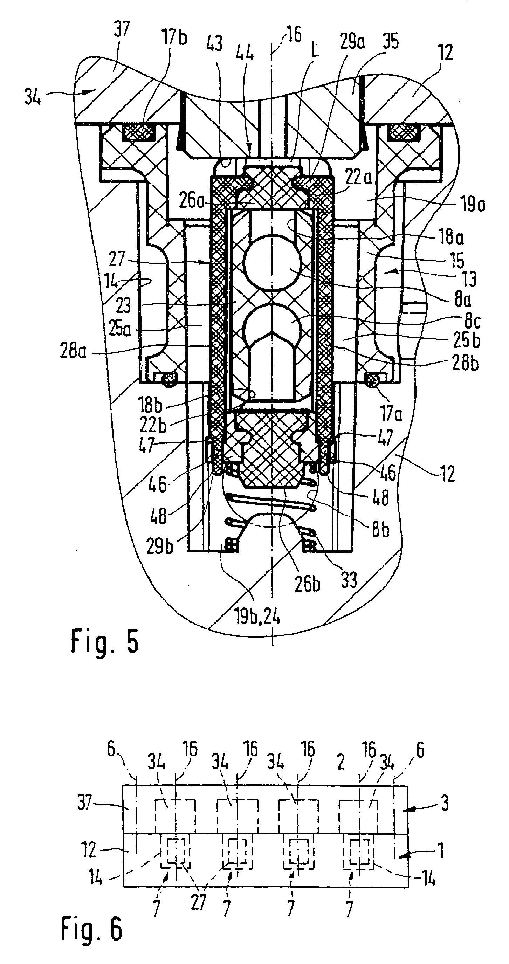

Die Magnetventileinrichtung enthält einen Grundkörper 1 und einen an einer Befestigungsseite 2 desselben montierten Antriebskopf 3. Beim Ausführungsbeispiel der Figuren 1 bis 5 ist der Antriebskopf 3 unlösbar am Grundkörper 1 befestigt, indem er mit einem manschettenartigen Befestigungsabschnitt 4 auf einen Kragen 5 des Grundkörpers 1 aufgesteckt und durch Einrollieren in eine am Außenumfang des Kragen 5 ausgebildete Nut befestigt ist. Bei dem Ausführungsbeispiel der Figur 6 liegt eine lösbare Verbindung vor, die beispielsweise mittels einer Schraubverbindung realisiert wird, wobei entsprechende Befestigungsschrauben bei 6 strichpunktiert angedeutet sind.

Die Magnetventileinrichtung der Figuren 1 bis 5 verkörpert eine einzige Magnetventileinheit mit einer 3/2-Ventilfunktion. In der Bauform der Figur 6 sind mehrere, insbesondere in einer oder mehreren linearen Reihen aufeinanderfolgend angeordnete Magnetventileinheiten 7 zu einer Baugruppe zusammengefasst. Jede Magnetventileinheit 7 dieser Baugruppe hat wiederum eine 3/2-Ventilfunktion.

Gemäß Figuren 1 bis 5 ist der Grundkörper 1 von mehreren Ventilkanälen 8 durchsetzt, unter denen sich ein Speisekanal 8a, ein Arbeitskanal 8b und ein Entlüftungskanal 8c befinden. Alle drei Ventilkanäle 8 münden einenends zur Außenfläche des Grundkörpers 1, wobei ihren Endabschnitten Anschlussmittel zugeordnet sind, die das Anschließen einer wegführenden Fluidleitung ermöglichen oder, im Falle des Entlüftungskanals 8c, auch das Anbringen eines Schalldämpfers.

Der Grundkörper 1 setzt sich bevorzugt zusammen aus einem beim Ausführungsbeispiel aus Metall, insbesondere Aluminiumdruckgussmaterial, bestehenden Gehäuse 12 und einem diesbezüglich separaten Einsatz 13, der in eine zur Befestigungsseite 2 hin offene Ausnehmung 14 des Gehäuses 12 eingesteckt ist. Die Längsachse der Ausnehmung 14 und des Einsatzes 13 sei im folgenden als Hauptachse 16 bezeichnet, sie verläuft beim Ausführungsbeispiel rechtwinkelig zu der an der Befestigungsseite 2 vorgesehenen Außenfläche des Grundkörpers 1.

Der Einsatz 13 umfasst einen aus Kunststoffmaterial bestehenden Einsatzkörper 15 und an dessen axial orientierten Stirnflächen angeordnete erste und zweite Dichtungsmittel 17a, 17b. Diese Dichtungsmittel können nach Art von O-Ringen oder Dichtmasken ausgebildet sein, wobei es sich um gesonderte oder an den Einsatzkörper 15 angeformte Komponenten handeln kann. Die ersten Dichtungsmittel 17a dichten gegenüber der Grundfläche der Ausnehmung 14 und die zweiten Dichtungsmittel 17b gegenüber dem angesetzten Antriebskopf 3 ab.

Die Ventilkanäle 8 verlaufen teils im Gehäuse 12 und teils im Einsatzkörper 15. Der Speisekanal 8a endet innerhalb des Grundkörpers 1 mit einer ersten Kanalmündung 18a in eine erste Ventilkammer 19a aus. Der Entlüftungskanal 8c endet innerhalb des Grundkörpers 1 mit einer zweiten Kanalmündung 18b, die in eine zweite Ventilkammer 19b übergeht. Beide Kanalmündungen 18a, 18b liegen auf der Hauptachse 16, sind allerdings einander entgegengesetzt orientiert. Die erste Kanalmündung 18a ist dem Antriebskopf 3, die zweite Kanalmündung 18b dem Grund der Ausnehmung 14 zugewandt. Um jede Kanalmündung 18a, 18b herum ist ein erster bzw. zweiter ringförmiger Ventilsitz 22a, 22b am Grundkörper 1 ausgebildet, wobei auch diese Ventilsitze 22a, 22b mit der Hauptachse 16 als Zentrum koaxial zueinander angeordnet sind und in einander axial entgegengesetzte Richtung weisen.

Die Ventilsitze 22a, 22b befinden sich einschließlich der zugehörigen Kanalmündungen 18a, 18b an einem Abschnitt des zum Grundkörpers 1 gehörenden Einsatzkörpers 15, der im folgenden als Ventilsitzabschnitt 23 bezeichnet sei. Der Ventilsitzabschnitt 23 ist in Richtung der Hauptachse 16 einerseits, auf der Seite des Antriebskopfes 3, von der ersten Ventilkammer 19a und andererseits von der zweiten Ventilkammer 19b flankiert.

Die erste Ventilkammer 19a ist von einer im Durchmesser größer als die erste Kanalmündung 18a ausgebildeten axialen Ausnehmung des Einsatzkörpers 15 und dem diese Ausnehmung verschließenden Antriebskopf 3 definiert. Die zweite Ventilkammer 19b befindet sich auf der dem Antriebskopf 3 entgegengesetzten Unterseite des Einsatzkörpers 15 in einem axialen Fortsatz 24 der Ausnehmung 14.

Der Arbeitskanal 18b steht ständig mit der zweiten Ventilkammer 19b in Verbindung.

Zwischen den beiden Ventilkammern 19a, 19b liegt über zwei parallel zur Hauptachse 16 verlaufende Verbindungskanäle 25a, 25b eine ständige fluidische Verbindung vor. Diese Verbindungskanäle 25a, 25b durchsetzen den Einsatzkörper 15 im Bereich des Außenumfanges des Ventilsitzabschnittes 23 an bezüglich der Hauptachse 16 einander diametral gegenüberliegenden Stellen. Der Querschnitt der Verbindungskanäle 25a, 25b kann insbesondere eine Form vergleichbar einem Kreisabschnitt haben.

Der Einsatz 13 trägt ein in Richtung der Hauptachse 16 hin und her bewegbares Steuerglied 27. Dieses hat die Form eines rechteckigen Rahmens und umschließt den Ventilsitzabschnitt 23 mit axialem Bewegungsspiel.

Das Steuerglied 27 besitzt eine starre Rahmenstruktur, die sich aus zwei parallel zur Hauptachse 16 verlaufenden Rahmen-Längselementen 28a, 28b und zwei rechtwinkelig zu der Hauptachse 16 verlaufenden Rahmen-Querstegen 29a, 29b zusammensetzt. Die beiden Rahmen-Längselemente 28a, 28b durchsetzen jeweils einen der Verbindungskanäle 25a, 25b und sind an ihren Enden, zum einen innerhalb der ersten Ventilkammer 19a und zum anderen innerhalb der zweiten Ventilkammer 19b, durch je einen der beiden Rahmen-Querstege 29a bzw. 29b fest miteinander verbunden. Der Querschnitt der Verbindungskanäle 25a, 25b ist größer als derjenige der sie durchsetzenden Rahmen-Längselemente 28a, 28b, so dass ein ungehindertes Hindurchströmen des zu steuernden Druckmediums, insbesondere Druckluft, gewährleistet ist.

An den beiden Rahmen-Querstegen 29a, 29b, ist jeweils ein aus Elastomermaterial oder aus anderem gummielastische Eigenschaften aufweisendem Material bestehender Verschlusskörper 26a, 26b befestigt. Diese Verschlusskörper 26a, 26b liegen dem jeweils zugeordneten Ventilsitz 22a bzw. 22b axial gegenüber und können durch axiale Verlagerung des Steuergliedes 27 abwechselnd in eine Schließstellung verbracht werden, in der sie unter Überdeckung und Verschluss der zugeordneten Kanalmündung 18a bzw. 18b an dem diese umgrenzenden Ventilsitz 22a, 22b anliegen.

Beim Ausführungsbeispiel sind die beiden Rahmen-Querstege 29a, 29b jeweils zentral von einer Durchbrechung durchsetzt, in die der zugeordnete Verschlusskörper 26a bzw. 26b beispielsweise eingeknöpft oder durch Spritzgießen eingeformt ist.

Die beiden Verschlusskörper 26a, 26b bilden somit zusammen mit den Rahmen-Längselementen 28a, 28b und den Rahmen-Querstegen 29a, 29b das Steuerglied 27, das in der Richtung der Hauptachse 16 relativ zu dem Ventilsitzabschnitt 23 zwischen zwei Arbeitsstellungen bewegbar ist. In diesen Arbeitsstellungen liegt der jeweils eine Verschlusskörper am zugeordneten Ventilsitz dichtend an, während der jeweils andere Verschlusskörper vom zugeordneten Ventilsitz abgehoben ist und eine Verbindung zwischen der damit frei gegebenen Kanalmündung und der sich anschließenden Ventilkammer freigibt.

Um bei dieser Schaltbewegung ein Verkanten des Steuergliedes 27 zu verhindern, ist es am Einsatzkörper 15 linear verschiebbar geführt. Zweckmäßigerweise geschieht dies dadurch, dass die beiden Rahmen-Längselemente 28a, 28b jeweils in einer in den Außenumfang des Ventilsitzabschnittes 23 eingebrachten linearen Führungsnut 32 laufen.

Die Figur 5 zeigt das Steuerglied 27 unter Einnahme der ersten Arbeitsstellung. Hierbei ist die zum Speisekanal 8a gehörende erste Kanalmündung 18a durch den ersten Verschlusskörper 26a abgesperrt und es liegt eine offene Verbindung zwischen der zum Entlüftungskanal 8c gehörenden zweiten Kanalmündung 18b und dem an die zweite Ventilkammer 19b angeschlossenen Arbeitskanal 8b vor. Der Arbeitskanal 8b und ein daran eventuell angeschlossener Verbraucher werden somit entlüftet.

In der entgegengesetzten, nicht dargestellten zweiten Arbeitsstellung schließt der zweite Verschlusskörper 26b den Entlüftungskanal 8c ab und es liegt über die beiden Verbindungskanäle 25a, 25b eine fluidische Verbindung zwischen den beiden Ventilkammern 19a, 19b und mithin dem Arbeitskanal 8b und dem vom ersten Verschlusskörper 26a frei gegebenen Speisekanal 8a vor. Auf diese Weise kann einem an den Arbeitskanal 8b angeschlossenen Verbraucher ein unter Druck stehendes Fluid zugeführt werden.

Durch Federmittel 33, beispielhaft eine sich axial zwischen der Unterseite des Steuergliedes 27 und dem Grund des Fortsatzes 24 abstützende mechanische Druckfedereinrichtung, ist das Steuerglied 27 ständig in Richtung seiner zweiten Arbeitsstellung elastisch nachgiebig beaufschlagt. Die Federmittel 33 greifen dabei am zweiten Rahmen-Quersteg 29b an.

Die zum Umschalten des Steuergliedes 27 in die erste Arbeitsstellung erforderliche Stellkraft liefert eine in den Antriebskopf 3 integrierte elektromagnetische Antriebseinheit 34. Diese beinhaltet einen in axialer Verlängerung des Ventilsitzabschnittes 23 angeordneten, gleichachsig zu den beiden Ventilsitzen 22a, 22b angeordneten beweglichen Magnetanker 35 aus weichmagnetischem Material. Der Magnetanker 35 hat eine im wesentlichen zylindrische Gestalt und schließt sich axial an den ersten Ventilsitz 22a an, wobei der erste Rahmen-Quersteg 29a zwischen dem ersten Ventilsitz 22a und der diesem zugewandten Stirnfläche des Magnetankers 35 angeordnet ist.

Der Magnetanker 35 ist in Richtung der Hauptachse 26 verschiebbar in einer ihn koaxial umschließenden Magnetspule 36 angeordnet. Diese sitzt in einem Gehäuse 37 des Arbeitskopfes 3, an dessen Außenseite elektrische Anschlussmittel 38 vorhanden sind, die mit der Magnetspule 36 kontaktiert sind und über die die Betätigungsenergie für die Magnetspule 36 eingeleitet werden kann.

Durch eine sich andererseits am Gehäuse 37 abstützende Federeinrichtung 42 ist der bewegliche Magnetanker 35 ständig in Richtung des Ventilsitzabschnittes 23 vorgespannt. Die Federeinrichtung 42 beaufschlagt den Magnetanker 35 zweckmäßigerweise an seiner dem Steuerglied 27 axial entgegengesetzten rückseitigen Stirnfläche.

Der Magnetanker 35 kann antriebsmäßig auf das Steuerglied 27 einwirken. In diesem Zusammenhang ist der Magnetanker 35 ein bezüglich dem Steuerglied 27 gesondertes Bauteil, das im Rahmen eines losen Berührkontaktes schiebend auf das Steuerglied 27 einwirken kann.

Die dem Ventilsitzabschnitt 23 zugewandte Stirnfläche des Magnetankers 35 bildet eine in Richtung der Hauptachse 26 orientierte Beaufschlagungsfläche 43, die an einer ihr zugewandten Gegen-Beaufschlagungsfläche 44 des Steuergliedes 27 anliegen kann.

Die Stellkraft der Federeinrichtung 42 ist größer als diejenige der Federmittel 33. Im elektrisch deaktivierten Zustand der elektromagnetischen Antriebseinheit 34 nimmt der Magnetanker 35 somit die aus der Zeichnung ersichtliche, axial an den Ventilsitzabschnitt 23 angenäherte Grundstellung ein, wobei er mit seiner Beaufschlagungsfläche 43 auf das Steuerglied 27 einwirkt und dieses in der ersten Arbeitsstellung hält. Beim Umschalten in die erste Arbeitsstellung schiebt der Magnetanker 35 das Steuerglied 27 vor sich her.

Durch elektrische Aktivierung der Antriebseinheit 34 kann der Magnetanker 35 entgegen der Stellkraft der Federeinrichtung 42 in eine vom Ventilsitzabschnitt 23 axial weiter entfernte, betätigte Stellung verlagert werden. Bei dieser Bewegung folgt das unter der Beaufschlagung der Federmittel 33 stehende Steuerglied 27 nach, bis es die zweite Arbeitsstellung erreicht hat. Die Auslegung ist zweckmäßigerweise so getroffen, dass bei in der zweiten Arbeitsstellung befindlichem Steuerglied 27 ein kleiner axialer Spalt zwischen ihm und dem die betätigte Stellung einnehmenden Magnetanker 35 vorliegt. Auf diese Weise ist gewährleistet, dass der zweite Verschlusskörper 26b mit voller Dichtkraft am zweiten Ventilsitz 22b anliegt.

Ersichtlich fungieren die beiden Rahmen-Längselemente 28a, 28b beim Umschalten des Steuergliedes 27 als Kopplungsstäbe, durch die die beiden Verschlusskörper 26a, 26b zwangsweise bewegungsgekoppelt sind, so dass in der Schließstellung des jeweils einen Verschlusskörpers der jeweils andere Verschlusskörper automatisch die Offenstellung einnimmt.

Die Beaufschlagungsfläche 43 und zugeordnete Gegen-Beaufschlagungsfläche 44 erstrecken sich in einer zur Hauptachse 16 rechtwinkeligen Ebene. Dadurch ergibt sich quer zur Richtung der Hauptachse 16 eine freie relative Beweglichkeit zwischen Magnetanker 35 und Steuerglied 27. Dies hat zur Folge, dass die Antriebskräfte zwischen den beiden Komponenten auch dann problemlos und störungsfrei übertragen werden, wenn aufgrund von Fertigungs- und/oder Montagetoleranzen ein Querversatz zwischen der Längsachse des Magnetankers 35 und derjenigen des Steuergliedes 27 vorliegt. Ein solcher Querversatz kann sich beispielsweise durch eine leicht versetzte Montage der elektromagnetischen Antriebseinheit 34 einstellen.

Die mit dem Magnetanker 35 zusammenwirkende Gegen-Beaufschlagungsfläche 44 befindet sich an der Rahmenstruktur des Steuergliedes 27 und nicht am benachbarten ersten Verschlusskörper 26a. Sie befindet sich insbesondere an dem den ersten Verschlusskörper 26a tragenden ersten Rahmen-Quersteg 29a, wobei sie zum ersten Verschlusskörper 26a in Richtung zum Magnetanker 35 axial beabstandet ist. Somit verbleibt zwischen dem Magnetanker 35 und dem ersten Verschlusskörper 26a ein axialer Luftspalt "L", wenn die Beaufschlagungsfläche 43 an der Gegen-Beaufschlagungsfläche 44 anliegt.

Durch diese Maßnahme wird eine zu starke Wärmeübertragung vom Magnetanker 35 auf den unmittelbar benachbarten ersten Verschlusskörper 26a verhindert. Selbst wenn die elektromagnetische Antriebseinheit 34 für längere Zeit aktiviert ist und sich aufheizt, findet somit eine nur geringe Erwärmung des ersten Verschlusskörpers 26a statt, so dass an den für ihn verwendeten Werkstoff keine hohen Anforderungen gestellt sind und eine kostengünstige Variante gewählt werden kann.

Von Vorteil ist in diesem Zusammenhang auch, wenn wenigstens der den ersten Verschlusskörper 26a tragende erste Rahmen-Quersteg 29a aus einem Material mit gegenüber dem Material des Magnetankers 35 geringerer Wärmeleitfähigkeit besteht. Insbesondere wird ein Kunststoffmaterial verwendet. Dies gilt im übrigen zweckmäßigerweise für die gesamte Rahmenstruktur des Steuergliedes 27.

Beim Ausführungsbeispiel besteht die Gegen-Beaufschlagungsfläche 44 aus zwei Flächenabschnitten, die an zwei axial vorspringenden rippenförmigen Erhebungen 45 des ersten Rahmen-Quersteges 29a ausgebildet sind, welche quer zur Hauptachse 26 zueinander beabstandet sind und zwischen denen sich der erste Verschlusskörper 26a befindet.

Beim Ausführungsbeispiel setzt sich die Rahmenstruktur des Steuergliedes 27 auf eine besonders vorteilhafte Weise zusammen. Der erste Rahmen-Quersteg 29a bildet gemeinsam mit den beiden davon abgehenden Rahmen-Längselementen 28a, 28b ein einstückiges, U-förmiges Rahmenelement, wobei der zweite Rahmen-Quersteg 29b ein gesondertes Bauteil ist und an den beiden freien Endabschnitten der Rahmen-Längselemente 28a, 28b befestigt ist. Beim Zusammenbau der Ventileinrichtung kann somit bei noch außerhalb des Gehäuses 12 befindlichem Einsatz 13 das U-förmige Rahmenelement von der einen Axialseite her durch die beiden Verbindungskanäle 25a, 25b hindurch gesteckt werden, um anschließend den zweiten Rahmen-Quersteg 29b anzubringen und dadurch die Rahmenstruktur zu vervollständigen. Der auf diese Weise vorbestückte Einsatz 13 kann dann, nachdem zuvor noch die Federmittel 33 eingelegt wurden, in die Ausnehmung 14 eingesetzt werden.

Zur Befestigung an dem U-förmigen Rahmenelement verfügt der zweite Rahmen-Quersteg 29b zweckmäßigerweise über zwei zueinander beabstandete Durchbrechungen 46, durch die die beiden Rahmen-Längselemente 28a, 28b bis zum Erreichen einer Anschlagschulter 47 hindurch gesteckt werden, worauf die über den zweiten Rahmen-Quersteg 29b überstehenden Kopfenden 48 der Rahmen-Längselemente 28a, 28b vernietet werden. Letzteres geschieht bei einer Kunststoffausführung zweckmäßigerweise unter Temperatureinfluss, so dass ein Schmelzvorgang stattfindet. Eine andere Verbindungsart wäre allerdings ebenfalls möglich.

Des Weiteren könnte auch vorgesehen werden, dass der zweite Rahmen-Quersteg 29b zu dem einstückigen U-förmigen Rahmenelement gehört und der erste Rahmen-Quersteg 29a als gesonderte Komponente ausgeführt ist.

Zweckmäßigerweise wird der Einsatz 13 durch den angesetzten Antriebskopf 3 in der Ausnehmung 14 gehalten. Da hierbei ein direkter Kontakt zwischen Antriebskopf 3 und Einsatz 13 möglich ist, empfiehlt sich für den Einsatzkörper 15 eine Realisierung aus einem hochtemperaturfesten Kunststoffmaterial.

Bei dem Ausführungsbeispiel der Figur 6 enthält die Magnetventileinrichtung gleichzeitig mehrere Magnetventileinheiten 7, die entsprechend dem anhand der Figuren 1 bis 5 geschilderten Aufbau gestaltet sind. Das Gehäuse 12 des Grundkörpers 1 enthält mehrere zur Befestigungsseite 2 hin offene Ausnehmungen 14, in die jeweils ein mit einem Steuerglied 27 bestückter Einsatz eingesetzt ist. Das Gehäuse 12 ist hierbei insbesondere block- oder plattenartig ausgebildet.

Der Antriebskopf 3 besitzt ein ebenfalls block- oder plattenartig gestaltetes Gehäuse 37, in dem eine der Anzahl der Magnetventileinheiten 7 entsprechende Anzahl elektromagnetischer Antriebseinheiten 34 untergebracht ist. Bei der Montage des Antriebskopfes 3 am Grundkörper 12 werden die einzelnen Komponenten unter Bildung der Magnetventileinheiten 7 miteinander vereinigt. Dabei ist die Funktionsfähigkeit der einzelnen Magnetventileinheiten 7 selbst dann gewährleistet, wenn aufgrund eines toleranzbedingten Querversatzes keine exakt koaxiale Ausrichtung zwischen den Magnetankern 35 und dem jeweils zugeordneten Steuerglied 27 vorliegt.

## Patentansprüche

1. Magnetventileinrichtung, mit einem von Ventilkanälen (8) durchsetzten Grundkörper (1), der mindestens einen Ventilsitzabschnitt (23) aufweist, an dem zwei unter koaxialer Anordnung auf einer gemeinsamen Hauptachse (16) liegende, in einander entgegengesetzte Richtungen weisende Ventilsitze (22a, 22b) angeordnet sind, denen jeweils ein Verschlusskörper (26a, 26b) gegenüberliegt, wobei die beiden Verschlusskörper (26a, 26b) durch zwei auf entgegengesetzten Seiten seitlich an dem Ventilsitzabschnitt (23) vorbeigreifende Kopplungsstäbe (28a, 28b) derart miteinander bewegungsgekoppelt sind, dass bei Anliegen des jeweils einen Verschlusskörpers (26a, 26b) am zugeordneten Ventilsitz (22a, 22b) der jeweils andere Verschlusskörper (26b, 26a) vom zugeordneten Ventilsitz (22b, 22a) abgehoben ist, und mit einem an dem Grundkörper (1) angeordneten Antriebskopf (3), der mindestens eine dem Ventilsitzabschnitt (23) zugeordnete elektromagnetische Antriebseinheit (34) mit einer Magnetspule (36) und einem in Verlängerung des Ventilsitzabschnittes (23) angeordneten, zur Vorgabe der Stellungen der Verschlusskörper (26a, 26b) in Richtung der Hauptachse (16) bewegbaren Magnetanker (35) aufweist, **dadurch gekennzeichnet, dass** die Verschlusskörper (26a, 26b) und die Kopplungsstäbe (28a, 28b) Bestandteile eines den Ventilsitzabschnitt (23) umschließenden, in Richtung der Hauptachse (16) bewegbaren rahmenförmigen Steuergliedes (27) sind, auf das der Magnetanker (35) ohne direkten Kontakt zum benachbarten Verschlusskörper (26a) antriebsmäßig einwirken kann und bezüglich dem der Magnetanker (35) ein gesondertes Bauteil ist.

2. Magnetventileinrichtung nach Anspruch 1, **dadurch gekennzeichnet, dass** das rahmenförmige Steuerglied (27) durch Federmittel (33) ständig in Richtung des Magnetankers (35) beaufschlagt ist, wobei zwischen Magnetanker (35) und Steuerglied (27) ein loser Berührkontakt vorliegt, so dass in Richtung der Hauptachse (16) lediglich Schubkräfte zwischen dem Magnetanker (35) und dem Steuerglied (27) übertragbar sind.

3. Magnetventileinrichtung nach Anspruch 2, **dadurch gekennzeichnet, dass** der Magnetanker (35) und das Steuerglied (27) durch den losen Berührkontakt derart zusammenwirken, dass zwischen ihnen quer zur Richtung der Hauptachse (16) eine freie relative Beweglichkeit gegeben ist.

4. Magnetventileinrichtung nach einem der Ansprüche 1 bis 3, **dadurch gekennzeichnet, dass** das rahmenförmige Steuerglied (27) zwei die Kopplungsstäbe bildendende Rahmen-Längselemente (28a, 28b) aufweist, die durch zwei zueinander beabstandete Rahmen-Querstege (29a, 29b) miteinander verbunden sind, die jeweils einen der Verschlusskörper (26a, 26b) tragen.

5. Magnetventileinrichtung nach Anspruch 4, **dadurch gekennzeichnet, dass** der Magnetanker (35) an einem der Rahmen-Querstege (29a) mit axialem Abstand zu dem von diesem getragenen Verschlusskörper (26a) angreift.

6. Magnetventileinrichtung nach Anspruch 4 oder 5, **dadurch gekennzeichnet, dass** die beiden Rahmen-Längsteile (28a, 28b) und einer der Rahmen-Querstege (29a) zu einem einstückigen, U-förmigen Rahmenelement zusammengefasst sind, wobei der andere Rahmen-Quersteg (29b) als gesondertes Bauteil an den freien Endabschnitten der Rahmen-Längselemente (28a, 28b) befestigt ist.

7. Magnetventileinrichtung nach Anspruch 6, **dadurch gekennzeichnet, dass** der gesondert ausgebildete Rahmen-Quersteg (29b) zwei Durchbrechungen (46) aufweist, mit denen er auf die freien Endabschnitte der Rahmen-Längsteile (28a, 28b) aufgesteckt ist.

8. Magnetventileinrichtung nach Anspruch 7, **dadurch gekennzeichnet, dass** die freien Endabschnitte der Rahmen-Längsteile (28a, 28b) durch die Durchbrechungen (46) hindurchgreifen und an ihren überstehenden Kopfenden (48), insbesondere unter Wärmeeinwirkung, vernietet sind.

9. Magnetventileinrichtung nach einem der Ansprüche 4 bis 8, **dadurch gekennzeichnet, dass** zumindest der dem Magnetanker (35) benachbarte Rahmen-Quersteg (29a) und insbesondere die gesamte Rahmenstruktur aus einem Material mit bezüglich dem Material des Magnetankers (35) geringerer Wärmeleitfähigkeit besteht.

10. Magnetventileinrichtung nach einem der Ansprüche 4 bis 9, **dadurch gekennzeichnet, dass** zumindest der dem Magnetanker (35) benachbarte Rahmen-Quersteg (29a) und insbesondere die gesamte Rahmenstruktur des Steuergliedes (27) aus Kunststoffmaterial besteht.

11. Magnetventileinrichtung nach einem der Ansprüche 1 bis 10, **dadurch gekennzeichnet, dass** die Verschlusskörper (26a, 26b) aus Material mit gummielastischen Eigenschaften bestehen, insbesondere aus einem Elastomermaterial.

12. Magnetventileinrichtung nach einem der Ansprüche 1 bis 11, **dadurch gekennzeichnet, dass** der Antriebskopf (3) eine bezüglich dem Grundkörper (1) gesonderte Komponente ist, die lösbar oder unlösbar an den Grundkörper (1) angebaut ist.

13. Magnetventileinrichtung nach einem der Ansprüche 1 bis 12, **dadurch gekennzeichnet, dass** der Grundkörper (1) ein Gehäuse (12) aufweist, das mindestens eine zum Antriebskopf (3) hin offene Ausnehmung (14) enthält, in die ein den Ventilsitzabschnitt (23) aufweisender und von Ventilkanälen (8) durchzogener Einsatz (13) eingesetzt ist.

14. Magnetventileinrichtung nach Anspruch 13, **dadurch gekennzeichnet, dass** der Einsatz (13) einen aus Kunststoffmaterial bestehenden Einsatzkörper (15) aufweist.

15. Magnetventileinrichtung nach einem der Ansprüche 1 bis 14, **gekennzeichnet durch** einen block- oder plattenförmigen Grundkörper (1) mit mehreren darin vorhandenen Ventilsitzabschnitten (23) und **durch** einen an den Grundkörper (1) angesetzten block- oder plattenförmigen Antriebskopf (3) mit mehreren jeweils einem der Ventilsitzabschnitte (23) des Grundkörpers (1) zugeordneten elektromagnetischen Antriebseinheiten (34).

## Claims

1. Solenoid valve assembly with a body (1) through which pass valve passages (8) and with at least one valve seat section (23) on which are mounted two valve seats (22a, 22b) lying in a coaxial arrangement on a common main axis (16) and facing in opposite directions, with a closing body (26a, 26b) opposite each of them, wherein the two closing bodies (26a, 26b) are movement-coupled to one another by means of two coupling rods (28a, 28b) reaching past the valve seat section (23) on opposite sides in such a way that when in each case one closing body (26a, 26b) fits up against the assigned valve seat (22a, 22b) the other closing body (26b, 26a) is lifted from the assigned valve seat (22b, 22a), and with a driving head (3) mounted on the body (1) which has at least one electro-magnetic drive unit (34) assigned to the valve seat section (23), with a solenoid coil (36) and a solenoid armature (35) provided as an extension of the valve seat section (23), for presetting the positions of the closing bodies (26a, 26b) movable along the main axis (16), **characterised in that** the closing bodies (26a, 26b) and the coupling rods (28a, 28b) are integral parts of a frame-like control element (27), encompassing the valve seat section (23) and movable in the direction of the main axis (16), on which the solenoid armature (35) is able to act for driving purposes without direct contact with the adjacent closing body (26a) and in respect of which the solenoid armature (35) is a separate component.

2. Solenoid valve assembly according to claim 1, **characterised in that** the frame-like control element (27) is constantly biased by spring means (33) towards the solenoid armature (35), while there is a loose touch contact between the solenoid armature (35) and the control element (27) so that in the direction of the main axis (16) only shear forces may be transmitted between the solenoid armature (35) and the control element (27).

3. Solenoid valve assembly according to claim 2, **characterised in that** the solenoid armature (35) and the control element (27) work together in such a way, through the loose touch contact, that there is free relative mobility between them at right-angles to the main axis (16).

4. Solenoid valve assembly according to any of claims 1 to 3, **characterised in that** the frame-like control element (27) has two longitudinal frame elements (28a, 28b) forming the coupling rods and joined together by two transverse frame webs (29a, 29b), spaced apart and each supporting one of the closing bodies (26a, 26b).

5. Solenoid valve assembly according to claim 4, **characterised in that** the solenoid armature (35) acts on one of the transverse frame webs (29a) with axial clearance from the closing body (26a) supported by it.

6. Solenoid valve assembly according to claim 4 or 5, **characterised in that** the two longitudinal frame elements (28a, 28b) and one of the transverse frame webs (29a) are combined to form a one-piece U-shaped frame element, while the other transverse frame web (29b) is fastened as a separate component to the free end sections of the longitudinal frame elements (28a, 28b).

7. Solenoid valve assembly according to claim 6, **characterised in that** the separate transverse frame web (29b) has two through holes (46) by which it is slipped over the free end sections of the longitudinal frame elements (28a, 28b).

8. Solenoid valve assembly according to claim 7, **characterised in that** the free end sections of the longitudinal frame elements (28a, 28b) reach through the through holes (46) and are welded at their projecting head ends (48), in particular under the effects of heat.

9. Solenoid valve assembly according to any of claims 4 to 8, **characterised in that** at least the transverse frame web (29a) adjacent to the solenoid armature (35), and in particular the whole frame structure, is/are made of a material with lower thermal conductivity than the material of the solenoid armature (35).

10. Solenoid valve assembly according to any of claims 4 to 9, **characterised in that** at least the transverse frame web (29a) adjacent to the solenoid armature (35), and in particular the whole frame structure of the control element (27), is/are made of plastic material.

11. Solenoid valve assembly according to any of claims 1 to 10, **characterised in that** the closing bodies (26a, 26b) are made of material with rubber-elastic properties, in particular of an elastomer material.

12. Solenoid valve assembly according to any of claims 1 to 11, **characterised in that** the driving head (3) is a separate component from the body (1), to which it is releasably or non-releasably attached.

13. Solenoid valve assembly according to any of claims 1 to 12, **characterised in that** the body (1) has a casing (12) containing at least one recess (14), open to the driving head (3), in which is placed an insert (13) containing the valve seat section (23) and the valve passages (8).

14. Solenoid valve assembly according to claim 13, **characterised in that** the insert (13) has an insert body (15) made of plastic material.

15. Solenoid valve assembly according to any of claims 1 to 14, **characterised by** a block- or plate-shaped body (1) containing several valve seat sections (23), and by a block- or plate-shaped driving head (3) attached to the body (1) and with several electro-magnetic drive units (34), each assigned to one of the valve seat sections (23) of the body (1).

## Revendications

1. Soupape électromagnétique, avec un corps de base (1) traversé de canaux de soupape (8), qui présente au moins une section de siège de soupape (23), au niveau de laquelle sont disposés deux sièges de soupape (22a, 22b) disposés de manière coaxiale sur un axe principal commun (16), orientés dans des directions opposées l'une l'autre, auxquels fait face respectivement un corps de fermeture (26a, 26b), les deux corps de fermeture (26a, 26b) étant accouplés cinématiquement les uns avec les autres par deux tiges d'accouplement (28a, 28b) s'engrenant latéralement à la section de siège de soupape (23) sur des côtés opposés de sorte que lors de l'appui de respectivement un corps de fermeture (26a, 26b) contre le siège de soupape associé (22a, 22b) respectivement l'autre corps de fermeture (26b, 26a) est décollé du siège de soupape (22b, 22a) associé, et avec une tête d'entraînement (3) disposée sur le corps de base (1), qui présente au moins une unité d'entraînement électromagnétique (34) associée à la section de siège de soupape (23) avec une bobine magnétique (36) et un induit (35), disposé dans le prolongement de la section de siège de soupape (23), pouvant se déplacer en direction de l'axe principal (16) pour indiquer les positions des corps de fermeture (26a, 26b), **caractérisée en ce que** les corps de fermeture (26a, 26b) et les tiges d'accouplement (28a, 28b) font partie d'un organe de commande (27) en forme de cadre amovible en direction de l'axe principal (16), entourant la section de siège de soupape (23), sur lequel organe l'induit (35) peut agir du point de vue de l'entraînement sans contact direct avec le corps de fermeture (26a) voisin et par rapport auquel l'induit (35) est un composant séparé.

2. Soupape électromagnétique selon la revendication 1, **caractérisée en ce que** l'organe de commande (27) en forme de cadre est sollicité en permanence en direction de l'induit (35) par des ressorts (33), dans laquelle il y a un contact lâche entre l'induit (35) et l'organe de commande (27), si bien qu'en direction de l'axe principal (16) seules des forces de poussée peuvent être transmises entre l'induit (35) et l'organe de commande (27).

3. Soupape électromagnétique selon la revendication 2, **caractérisée en ce que** l'induit (35) et l'organe de commande (27) interagissent par le contact lâche de sorte qu'il y a un jeu relativement libre entre eux perpendiculairement à la direction de l'axe principal (16).

4. Soupape électromagnétique selon l'une quelconque des revendications 1 à 3, **caractérisée en ce que** l'organe de commande en forme de cadre (27) présente deux éléments longitudinaux de cadre (28a, 28b) formant les tiges d'accouplement, qui sont reliés l'un à l'autre par deux traverses de cadre (29a, 29b) espacées l'une de l'autre, qui portent respectivement un des corps de fermeture (26a, 26b).

5. Soupape électromagnétique selon la revendication 4, **caractérisée en ce que** l'induit (35) est appliqué à une des traverses de cadre (29a) à distance axiale du corps de fermeture (26a) porté par celle-ci.

6. Soupape électromagnétique selon la revendication 4 ou 5, **caractérisée en ce que** les deux parties longitudinales de cadre (28a, 28b) et une des traverses de cadre (29a) sont regroupées en un élément de cadre en forme de U d'un seul tenant, l'autre traverse de cadre (29b) étant fixée comme composant séparé au niveau des sections d'extrémité libres des éléments longitudinaux de cadre (28a, 28b).

7. Soupape électromagnétique selon la revendication 6, **caractérisée en ce que** la traverse de cadre (29b) réalisée de manière particulière présente deux ouvertures (46), avec lesquelles elle est montée sur les sections d'extrémité libres des pièces longitudinales de cadre (28a, 28b).

8. Soupape électromagnétique selon la revendication 7, **caractérisée en ce que** les sections d'extrémité libres des pièces longitudinales de cadre (28a, 28b) traversent les ouvertures (46) et sont rivetées au niveau de leurs extrémités en saillie (48), en particulier sous l'effet de la chaleur.

9. Soupape électromagnétique selon l'une quelconque des revendications 4 à 8, **caractérisée en ce qu'**au moins la traverse de cadre (29a) voisine de l'induit (35) et en particulier l'ensemble de la structure de cadre est en un matériau présentant une conductibilité thermique plus faible par rapport à celle du matériau de l'induit (35).

10. Soupape électromagnétique selon l'une quelconque des revendications 4 à 9, **caractérisée en ce qu'**au moins la traverse de cadre (29a) voisine de l'induit (35) et en particulier l'ensemble de la structure de cadre de l'organe de commande (27) est en matière plastique.

11. Soupape électromagnétique selon l'une quelconque des revendications 1 à 10, **caractérisée en ce que** les corps de fermeture (26a, 26b) sont en un matériau ayant des propriétés élastiques, en particulier en un matériau élastomère.

12. Soupape électromagnétique selon l'une quelconque des revendications 1 à 11, **caractérisée en ce que** la tête d'entraînement (3) est un composant séparé par rapport au corps de base (1), qui est monté de manière amovible ou inamovible sur le corps de base (1).

13. Soupape électromagnétique selon l'une quelconque des revendications 1 à 12, **caractérisée en ce que** le corps de base (1) présente un boîtier (12), qui contient au moins un évidement (14) ouvert vers la tête d'entraînement (3), dans laquelle on utilise un insert (13) traversé par des canaux de soupape (8) et présentant une section de siège de soupape (23).

14. Soupape électromagnétique selon la revendication 13, **caractérisée en ce que** l'insert (13) présente un corps d'insert (15) en un matériau plastique.

15. Soupape électromagnétique selon l'une quelconque des revendications 1 à 14, **caractérisée par** un corps de base (1) en forme de bloc ou de plaques avec plusieurs sections de siège de soupape (23) présentes à l'intérieur et par une tête d'entraînement (3) en forme de bloc ou de plaques appliquée sur le corps de base (1) avec plusieurs unités d'entraînement électromagnétiques (34) respectivement associées à l'une des sections de siège de soupape (23) du corps de base (1).
